# EUROPEAN PATENT APPLICATION

(11) **EP 4 496 071 A2**
(43) Date of publication of application: **22.01.2025**
(21) Application number: 24218123.8
(22) Date of filing: 11.11.2021
(51) Int. Cl.: H01M 10/42

(54) **AN AUXILIARY DEVICE FOR MONITORING AN ELECTRIC BATTERY SYSTEM**

(62) Divisional of application: 21207824.0
(71) Applicant: Dukosi Limited, Edinburgh EH3 8RA (GB)
(72) Inventor: SYLVESTER, Joel, Edinburgh, EH3 8RA (GB); CRYMBLE, Tim, Edinburgh, EH3 8RA (GB); LEWORTHY, Josh, Edinburgh, EH3 8RA (GB)
(74) Representative: Finnegan Europe LLP

(57) **Abstract**

The present disclosure relates to an auxiliary device for monitoring a module and/or pack of an electric battery system. The auxiliary device provides module-level and/or pack-level measurements and may be flexibly placed anywhere within an electric battery monitoring system.

## Description

### BACKGROUND

Battery systems, comprising a plurality of battery cells, are used in a wide range of modern electric power applications. For example, they are used to power electric vehicles, they are used in industrial power applications, in transportation, and in commercial applications such as powering of modern electronic devices. Given the relatively high-power demands of such applications, a battery system often comprises a plurality of battery cells coupled together to achieve the required power output. The battery cells may be coupled together to form a battery pack, and the battery system may comprise one or more battery packs.

It is common to connect a battery system to a battery management system (BMS), configured to ensure that the battery system operates within its safe operating area. The safe operating area is defined as the voltage and current conditions and environmental conditions under which the battery system is expected to operate without self-damage. For further details, the interested reader is directed to the following Wikipedia website: https://en.wikipedia.org/wiki/Battery_management_system.

In certain known applications, performance characteristics of the battery cells within the battery system may be monitored, to identify potentially faulty operation of cells within the battery system before a catastrophic fault occurs. Such measurements are made with the use of devices called a Cell Monitoring Device (CMD). CMDs provide cell-level measurements such that separate measurements are taken on individual cells and the information obtained is with respect to an individual cell.

### SUMMARY

In some instances, it may be beneficial to receive information on a module or pack level, rather than on the level of an individual cell. Currently, in order to obtain such information, cell-level measurements from various CMDs are evaluated. Pack and module level measurements assist in providing more information to the monitored system, for example, abnormalities such as thermal runaway may be detected more easily. Thus, an auxiliary device is presented herein. The auxiliary device may be used to provide pack-level and/or module-level and/or battery system level measurements in a manner independent of the CMD.

Example embodiments presented herein comprise a method, in an auxiliary device, for monitoring a module and/or pack of an electronic battery system. The electronic battery system comprises at least one pack, where each pack comprises at least one module and each module comprises a plurality of battery cells. Each battery cell is monitored via a cell monitoring device (CMD) which provides cell-level measurements.

The method comprises obtaining, with at least one sensor comprised in the auxiliary device, a module-level and/or pack-level measurement associated with the at least one module and/or the at least one pack, respectively. The cell-level measurements are distinct from the module-level and pack-level measurements.

The method further comprises transmitting, via a near field antenna of the auxiliary device, to a centralized control unit, the module-level and/or pack-level measurement via a near field communications bus. The centralized control unit is configured to control operations of the electric battery system. The near field communications bus is utilized by respective CMDs, in transmitting, via respective near field antennas of the CMDs, cell-level measurements to the centralized control unit.

Example embodiments presented herein also comprise an auxiliary device for monitoring the module and/or pack of the electric battery system. Example embodiments further comprise a machine-readable storage medium storing a set of instructions that are executable by one or more processors of the auxiliary device for monitoring the module and/or pack. The auxiliary device and the set of instructions are configured to perform the method described above and herein.

### BRIEF DESCRIPTION OF THE DRAWINGS

The foregoing will be described in more detail with the following more particular description of the example embodiments, as illustrated in the accompanying drawings in which reference characters refer to the same parts throughout the different views. The drawings are not necessarily to scale, emphasis instead being placed upon illustrating the example embodiments.
**FIG. 1** is an illustration of a battery monitoring system;
**FIG. 2** is an illustration of a battery monitoring system featuring a master/slave communication configuration;
**FIG. 3** is an illustrative example of a battery monitoring system featuring an auxiliary device, according to some of the example embodiments presented herein;
**FIG. 4** is an illustrative example of an RF based powered auxiliary device, according to some of the example embodiments presented herein;
**FIG. 5** is an illustrative example of an auxiliary device powered by a battery module, according to some of the example embodiments presented herein;
**FIG. 6** is an illustrative example of an auxiliary device powered by an external source as well as a fan operation control process, according to some of the example embodiments presented herein;
**FIG. 7A** is a schematic of a fault indication control process, according to some of the example embodiments presented herein;
**FIG. 7B** is a schematic of a commutating switch control process, according to some of the example embodiments presented herein;
**FIG. 7C** is a schematic of a termination control process, according to some of the example embodiments presented herein;
**FIG. 8** is an illustrative example of EM filtering, according to some of the example embodiments presented herein;
**FIG. 9** is a schematic of an energy battery storage system featuring the battery monitoring system of **FIG. 2****;** and
**FIG. 10** is a schematic of an energy battery storage system featuring the battery monitoring system of **FIG. 3****,** according to some of the example embodiments presented herein.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

A battery system typically comprises multiple cells wired in a configuration to provide the desired battery system voltage and capacity and additional parts necessary for the safe operation of the cells and transfer of energy to/from the cells. A cell is the basic unit of any battery system. The defining characteristic of a cell is its electrochemical characteristics. For a particular cell chemistry, there is a minimum, typical and maximum voltage that is determined by the electrochemistry of the system, rather than the configuration of the system. The voltage cannot be varied other than by changing the state electrochemical state of the cell. Cells may be wired in parallel, to increase the overall capacity, but these paralleled cells can simply be regarded from a cell monitoring perspective as a larger single cell since they still have the same voltage characteristics as determined by the electrochemistry.

Cells can also be wired in series. The series stack of cells has a voltage primarily determined by the stack configuration. The voltage will be the sum of the cell voltages. The stack voltage can be varied by adding or removing cells without changing their electrochemical state. Typically, the stack of cells will be charged and discharged, with their electrochemical state changing in tandem. Each cell must be monitored to ensure it stays within its safe operating area. This is the job of the cell monitoring device (CMD). CMDs provide cell-level measurements such that separate measurements are taken on individual cells and the information obtained is with respect to an individual cell.

A battery pack consists of multiple cells in series. The battery pack provides the full battery system voltage. Multiple battery packs may be wired in parallel to increase the battery system capacity, but not in series. The cells may be grouped into modules. The defining characteristic of a module is its physical configuration, for example, the number and connectivity between a number of cells. A module may comprise of any number of cells. A module comprises of two or more cells, or an entire pack. In the case of there being only a single pack in the battery system, then a module could encompass an entire battery system.

More often though, a pack is configured as multiple modules, where each module is configured from multiple cells in series. Multiple modules are then wired in series, or in parallel and in series. Modules that are the battery system voltage and are wired in parallel may be considered as packs. A module has a defined size, shape and is typically packaged in an enclosure of some kind.

The module configuration is driven by the physical requirements of the battery pack. Often a module is configured to have a low enough voltage that it can be handled without there being an electrical shock hazard. Often a module is configured for a number of cells that matches the number of voltage sense inputs on a cell monitoring device. A very common example is a twelve cell monitoring device. A module then consists of twelve cells and a connection to a cell monitoring device. In many battery packs, the properties of the CMD define the configuration of a module, and the battery pack is then built from multiple such modules.

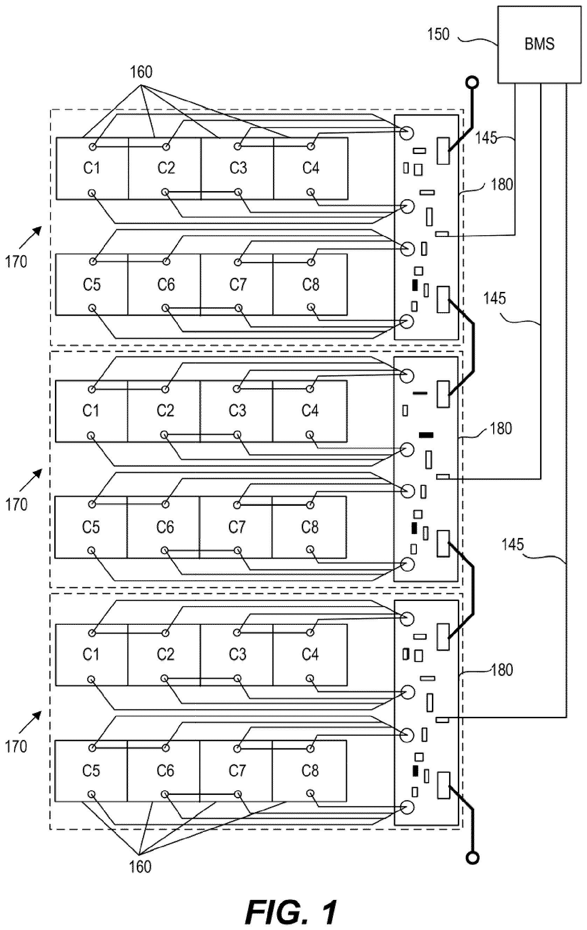

Figure 1 illustrates a known prior art system. The battery system of Figure 1 comprises three battery modules 170, with each battery module comprising eight battery cells (C1-C8) 160. Each battery cell C1-C8, within each battery module 170, is hardwired to a respective CMD 180. The position of each cell C1-C8 within battery module 170 may be mapped during assembly of battery module 170. In use, CMD 180 receives measurement data from each one of cells C1-C8, and can determine the source of the received measurement data based on the pre-defined cell mapping information. CMDs 180 illustrated in Figure 1 are connected in a star topology. Alternatively, each CMD 180 may be connected to BMS via a series daisy chain connection. A star topology is advantageous since there is no communication hierarchy imposed on BMS 150, and instead communication with each CMD 180 is by direct wired connection without use of any proxies.

A drawback of the system illustrated in Figure 1 is that certain measurements can only or need only be made at one location in the pack or module. By example, the current through a series string of cells does not need to be measured at every cell, since the current should be identical in every cell. So, it need only be measured once per series string. A CMD could be adapted to measure the current in the one or more cells it measures, but this introduces a limitation since it locates the current measurement at that CMD. It may be desirable to measure the current at another location in the pack, for instance at the point where power enters the battery system or pack. A long sensor wire could be routed from the CMD to the remotely located sensor, but this too is undesirable due to noise pickup. Adapting a CMD to make these pack level measurements also means that either one of the CMDs is different to the rest, or if all CMDs are adapted many will have sensor inputs is not connected and therefore is wasted on the other CMDs.

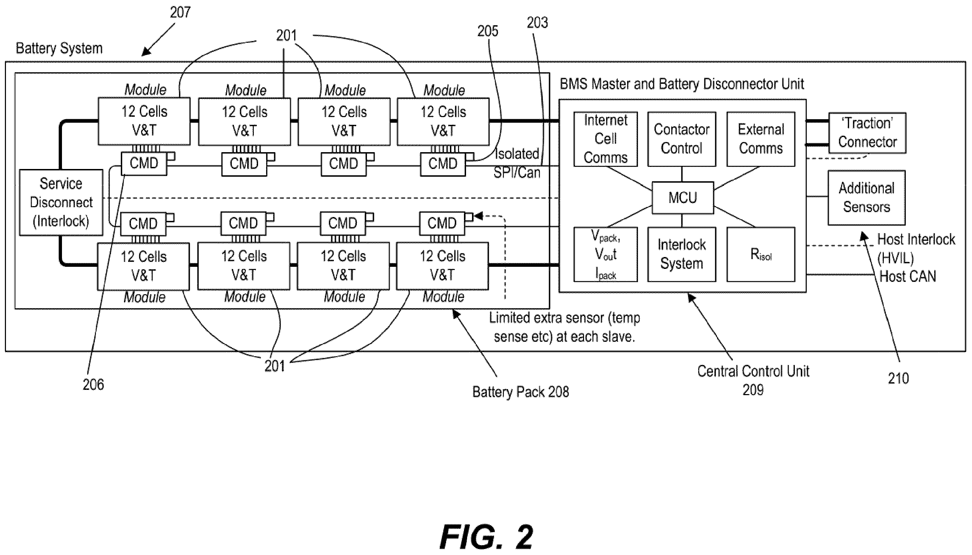

Figure 2 illustrates another known example of a battery system 207. The system of Figure 2 features a single battery pack 208 comprising eight battery modules 201. Each battery module comprises 12 cells and each cell is monitored by a respective CMD 206, where each CMD comprises 12 voltage measurements (V), one for each cell, and one or more temperature measurements (T). Each of the CMDs communicate with a central control unit 209 or Battery Management System (BMS)via an isolated SPI or CAN communications bus 203. The BMS controls the communications of each CMD. As illustrated in Figure 2, each CMD may comprise an additional hardwired sensor 205 which communicates via the CMD.

While Figure 2 illustrates the use of additional sensors 205 or 210, such sensors are hardwired to the CMD 201 or controller 209 and therefore do not allow for much flexibility with respect to placement within or on the battery system. Furthermore, the use of the controller/CMD configuration limits the availability to add further sensors or monitoring devices to pre-existing systems, e.g., after the initial implementation of the monitoring system. A further drawback with the system of Figure 2 is the additional sensors will not be able to use the same communication means without a significant system redesign.

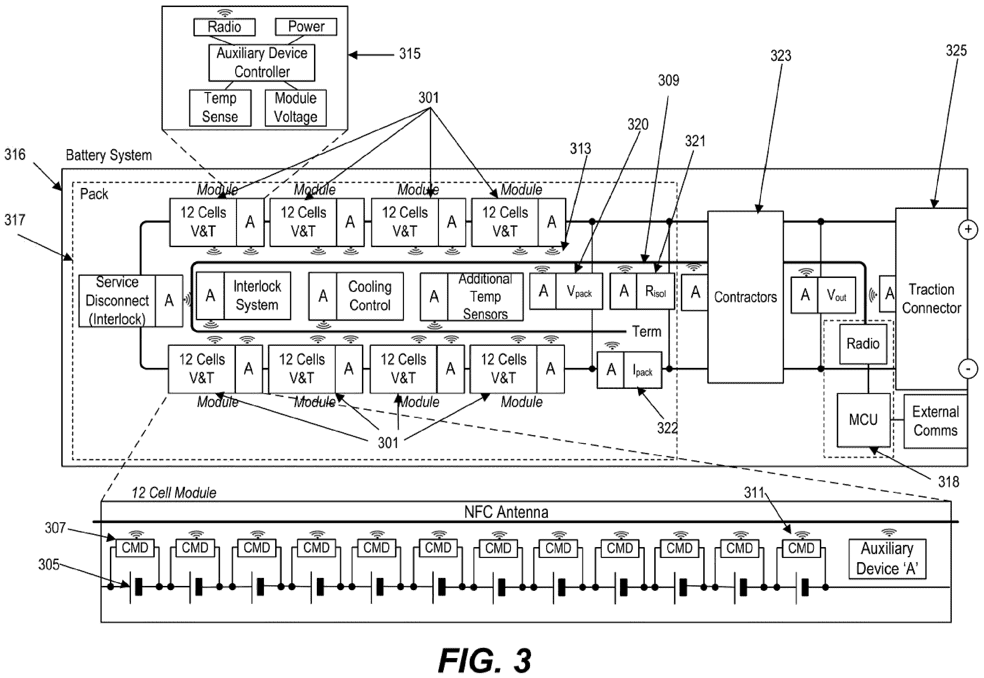

Thus, disclosed embodiments relate to an auxiliary device for monitoring a module, pack and/or electric battery system. The auxiliary device provides module-level, pack-level and/or system measurements and may be flexibly placed anywhere within an electric battery system. Figure 3 illustrates an electric battery system featuring an auxiliary device 315, according to some of the example embodiments presented herein. The electric battery system 316 of Figure 3 comprises a single battery pack 317 featuring eight battery modules 301. Each battery module 301 features twelve battery cells 305. Each battery cell 305 is monitored by a respective CMD 307, which provides cell-level measurements. Each CMD 307 is configured to communicate with a central controller or BMS via a near field communications bus 309. To enable such communications, each CMD comprises a respective near field antenna 311.

According to some of the example embodiments, an auxiliary device may be placed on or within the electric battery system to obtain a module-level or pack-level measurement. In the example provided in Figure 3, an auxiliary device A is located within an enclosure of each battery module 301. Such a placement allows for the auxiliary device to obtain module-level measurements of the battery system. It should be appreciated that an auxiliary device may be placed near a plurality of modules such that a single auxiliary device may obtain module-level measurements on a plurality of modules. In such an example embodiment, the auxiliary device may be located in between two adjacent modules, for example.

In the example provided by Figure 3, an auxiliary device A is also provided in a location allowing for pack level measurements to be obtained. Specifically, auxiliary device A 320, 321 and 322 provides an example of an auxiliary device featuring a pack voltage measurement sensor, a battery system isolation resistance measurement sensor and a pack current measurement sensor, respectively. A further example of a placement of an auxiliary device for obtaining pack-level measurements is provided in 323 where an auxiliary device is placed in proximity to a pack switch, commonly called contactors, and associated drive and sense circuitry. An auxiliary device A 324 may be configured to measure an output voltage of the battery pack. As a further example, an auxiliary device A may be placed in proximity to the main power connection to the battery system (traction connector) 325. The power connection includes a safety interlock switch which indicates the presence, or not, of the mating connector. Auxiliary device A on 325 is able to report the status of this safety interlock switch.

An enlarged view 315 of the auxiliary device A provides an example of features which may be comprised in the device. In the example provided in Figure 3, the auxiliary device A may comprise a temperature sensor and a voltage sensor. It should be appreciated the auxiliary device may comprise any number of or type of sensors used in monitoring an electric battery system. Examples of such sensors may be temperature, voltage, current, pressure, shock, gas, earth leakage, security/tamper detection, interlock status, fluid flow rate, gas flow rate, actuator position, fan/motor speed detector and/or other environmental sensors.

The auxiliary device A may also comprise a controller or processing unit which may be used to provide pre-processing to any obtained measurements as well as determining a control process based on any obtained measurements. According to some of the example embodiments, the auxiliary device may have programmable processing capabilities which allows the control functions of the pack to be distributed between the central controller and the modules. This means the module can continue to operate even when the central controller is inactive. According to some of the example embodiments, the auxiliary device can implement two operating modes: active and sleep. In active mode the auxiliary device will be reporting its measurements to the system controller regularly (e.g. once per second). In sleep mode the auxiliary device will draw minimal power and only take measurements occasionally. These measurements will be processed and/or stored locally and after this the auxiliary device will enter sleep mode again.

According to some of the example embodiments, the auxiliary device is monitoring the presence of the Manual Service Disconnect, external high voltage connectors or a safety interlock external to the battery system and transmitting the status to the central controller.

The auxiliary device 315 may further comprise a radio frequency antenna 313 which is used to communicate with the central controller 318, or BMS, via the near field communication bus 309 in the same manner and using the same protocols as the individual CMDs. The radio frequency antenna 313 may be used in transmitting obtained module-level, pack-level and/or system level measurements to the centralized control unit. The transmitted measurements may further comprise a unique identifier associated with the auxiliary device used by the centralized controller in identifying the communicating auxiliary device. The auxiliary device may also contain the unique identifiers of CMDs or other auxiliary devices that are within the same module such that the auxiliary device may make a control decision based on a subset of CMDs measurements. The radio frequency antenna 313 may also be configured to receive, from the centralized control unit, measurement and/or operation instructions.

According to some of the example embodiments, the auxiliary device may also include a memory unit which may compile a history of past measurements taken by the auxiliary device. The stored history may be used by the auxiliary device in determining a control process within the battery system. It should be appreciated the auxiliary device may also be configured to perform measurements and/or operational tasks autonomously.

It should be appreciated the placement of the auxiliary device in Figure 3 is merely provided as an example. Any number of auxiliary devices may be employed at any location along/adjacent to the near field communications bus without the use of additional wiring. The use of the near field communications bus allows for the auxiliary device to be added to the electric battery system which may pre-exist and therefore the battery monitoring system may be adapted depending on a need which may arise. Such adaptation may be provided without the need of extensive remodelling or the use of new communication protocols.

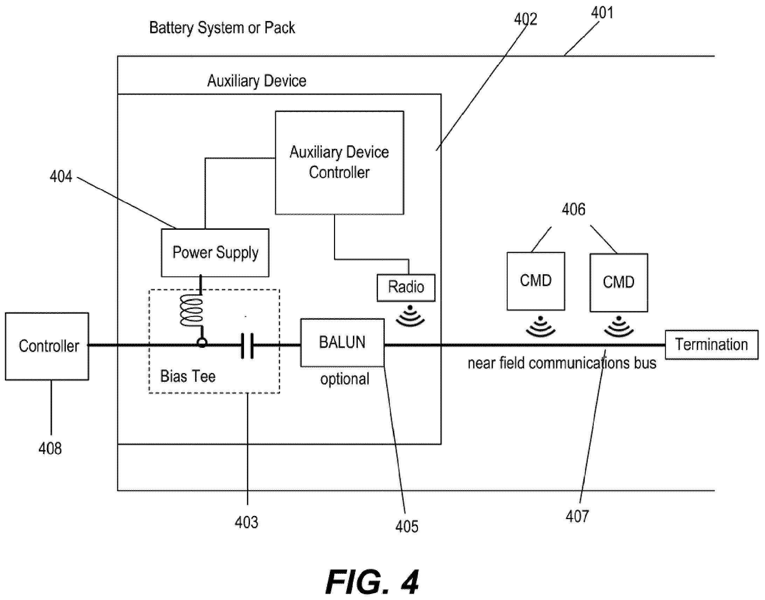

According to some of the example embodiments, the auxiliary device may derive its power from the electric battery system without requiring a redesign to the pre-existing battery system. Figure 4 is an example in which the auxiliary device 402, comprised within a pack enclosure 401, derives its power from the near field communications bus 407, for example, with use of a bias-tee mechanism 403. A bias tee is a standard RF device with three ports, an RF port, a DC port, and a RF+DC port. The bias-tee acts to separate the RF and DC energy on the RF+DC port, feeding the RF energy out on the RF port, and hence to the bus antenna, and the DC energy out to the DC port, where it is used to power the auxiliary device via a power supply regulation circuit 404.

Figure 4 also shows the use of a balun 405. This permits the RF signal, with super-imposed DC power, to be distributed from the central controller 408 on an unbalanced connection, for instance, on a coaxial cable. The unbalanced connection is then converted to a balanced near field bus antenna signal. In general, the near field bus can be balanced or unbalanced, and a balun may not be required. If however a balun is present then this is an opportune location for the auxiliary device as it facilitates the use of a bias-tee to power the auxiliary device.

In Figure 4 the DC power can be provided to the auxiliary device without additional connections. Note that the CMDs 406 cannot be powered using a bias-tee as this would require every CMD to make an electrical connection (as opposed to a near field connection), and thus break the isolation requirements, or forcing the added complication of an isolated DC:DC converter. Because the auxiliary device need not connect to any cells, it can be at any electrical potential, including that of the bus antenna.

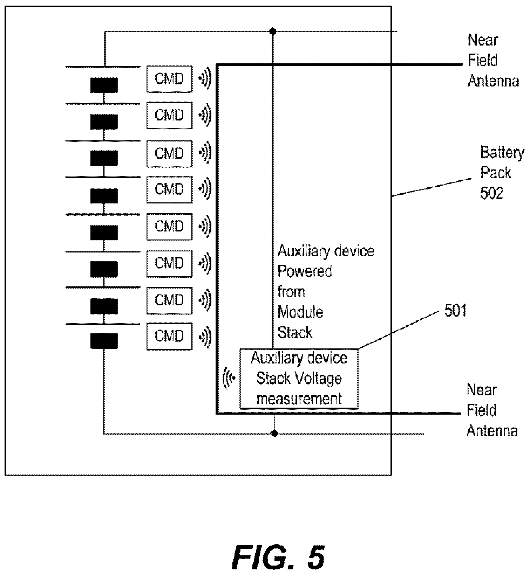

According to some of the example embodiments, the auxiliary device may derive its power from the battery pack or module the auxiliary device is monitoring, as illustrated in Figure 5. In the example shown in Figure 5, the auxiliary device 501 is directly connected to the supply lines of the battery pack 502.

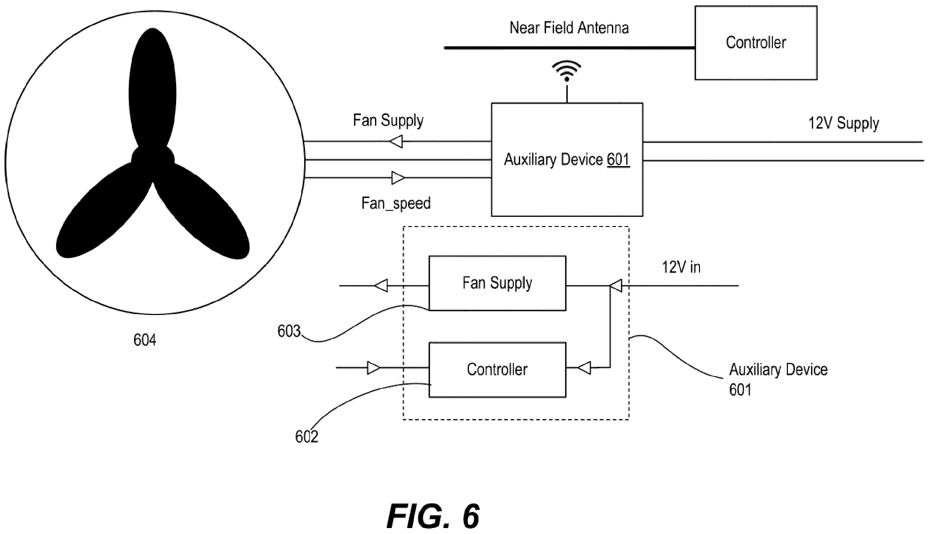

According to some of the example embodiments, the auxiliary device may derive its power from an external source within the electric battery system. In the example provided by Figure 6, the auxiliary device 601 is powered by a 12V external power supply which is also used to supply power to a fan 604 within the battery system. Specifically, the 12V external power supply may be configured to supply power to a fan supply 603 and controller 602 within the auxiliary device 601.

According to some of the example embodiments, the auxiliary device may be configured to control a process based on the obtained module-level, pack-level and/or system level measurement or instruction from the central controller.

According to some of the example embodiments, the control process may be controlling an operation of a fan or a cooling fluid valve or any other thermal management system of the electric battery system. For example, the auxiliary device may comprise a temperature sensor. Upon analysing an obtained module-level and/or pack-level measurement and/or system-level measurement and detecting high temperatures, or instruction from the central controller, the auxiliary device may be configured to open a fluid valve or, as shown in Figure 6, increase the speed of the fan 604 in an attempt to bring the temperature down.

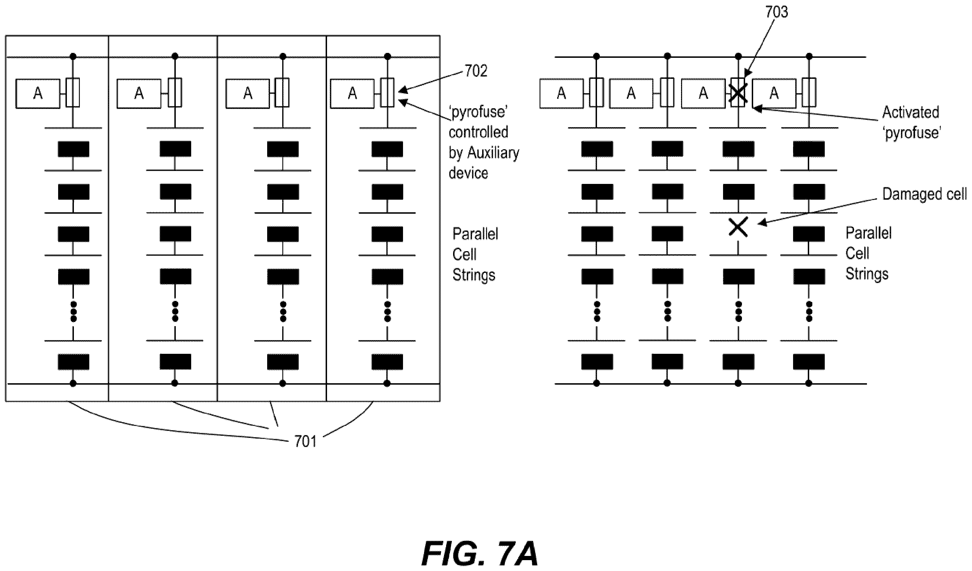

A further example of a control process is illustrated in Figure 7A. Figure 7A illustrates an arrangement of four battery packs 701 comprised in the form of parallel cell strings. An auxiliary device A is placed within each cell string and in control of an electrically operated disconnect or fuse 702 , such as a Pyrofuse. Based on an obtained pack-level measurement, the auxiliary device may detect a fault within the battery pack. Upon such a detection, or instruction from the central controller, the auxiliary device may activate a Pyrofuse 703 thereby removing the affected cell string from operation. With the removal of the cell string, the electric battery system will still be functional but the battery system will have reduced capacity.

According to some of the example embodiments, the control process may be controlling a safety disconnect such as contactors or solid state relays. For example, upon detecting an abnormality in the obtained module-level, pack-level and/or system-level measurement, or instruction from the central controller, the auxiliary device may activate a safety disconnect thereby halting the operation of the battery system to prevent a hazardous event.

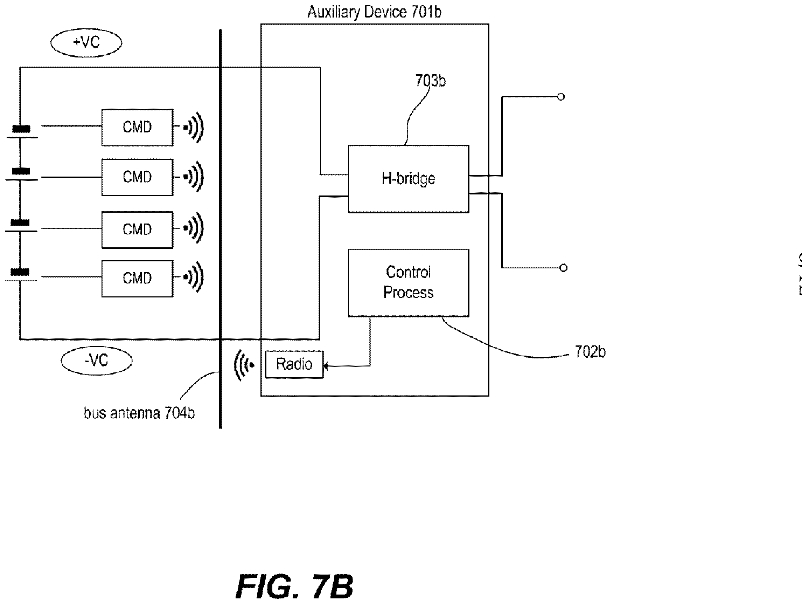

According to some of the example embodiments, the control process may be controlling a commutating switch such as, for example, an H bridge, as illustrated in Figure 7B. The commutating switch is used to control the way that the switched cells are connected into the battery system. The cells can typically either be disconnected from the stack (an open circuit), or are bypassed (a short circuit), or can be connected with either polarity. This has applications in motor control, where reversing the polarity may reverse the direction of a connected motor. It also has applications in Pulse Width Modulated systems, or in Modular Multi Level Converter systems, where in both cases arbitrary waveforms can be generated by rapidly switching cells in and out. The auxiliary device provides a means of integrating this switching into the Battery System. Figure 7B shows such an auxiliary device 701b, featuring a bus antenna 704b, with an H-bridge 703b being controlled by process 702b.

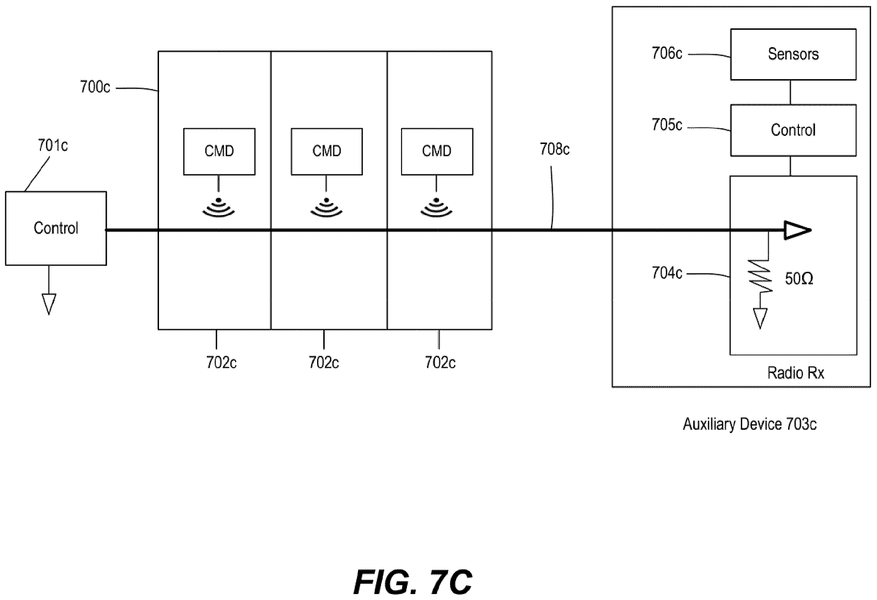

According to some of the example embodiments, the module is comprised within an enclosure and the auxiliary device is located at the boundary of the enclosure. Figure 7C illustrates the contents of a battery module enclosure 700c featuring multiple battery cells 702c, where each batter cell comprises a respective CMD. The auxiliary device 703c comprises any number of sensors 706c, an internal controller 705c and a radio receiver 704c. The auxiliary device 703c may be placed at the other end of the near field communications bus 708c from the central controller 701c, and be used to terminate the bus electrically. A near field bus is required to have a termination resistance with a value dependant on the characteristic impedance of the bus antenna. In this case, the auxiliary device does not couple to the near field bus using near field coupling, but instead connects directly to the bus. A radio receiver 704c comprised within the auxiliary device 703c provides the typically 50Ω termination impedance. The near field protocols used remain the same, and the auxiliary device continues to use the same near field bus as the CMDs.

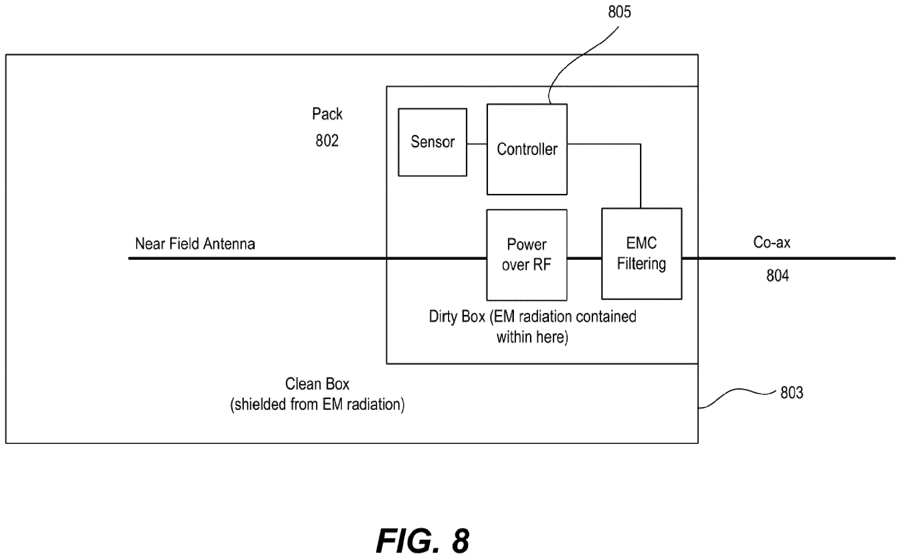

According to some of the example embodiment in which the auxiliary device is located at a boundary of the enclosure of the module, and where the auxiliary device takes its power via a bias-tee mechanism, the auxiliary device may be further configured to filter Electromagnetic (EM) interference from entering or leaving the enclosure, as illustrated in Figure 8. As illustrated in Figure 8, the EM filtering may create a 'clean box' within the battery pack 802. Electromagnetic interference picked up outside the enclosure 803 will be conducted into the clean box, on the near field communications bus 804. The auxiliary device 805 can filter the EM noise from the bus antenna by the use of an electrical filter as part of the bias-tee device put in line with the near field antenna, advantageously positioned where the connection is made through the enclosure. Noise energy is then directed onto the enclosure, rather than allowed into the enclosure., thereby improving the cell-level measurements which may be obtained by the CMDs located within the battery pack.

According to some of the example embodiments, the auxiliary device may be utilized in obtaining additional measurements associated with an environment external to the enclosure of the battery system. For example, the auxiliary device may be used to measure a temperature of the environment surrounding the battery pack enclosure, rather than the temperature resulting from the operation of the battery cells within the battery pack.

According to some of the example embodiments, the auxiliary device may further be configured to provide measurements associated with at least one auxiliary system, where the auxiliary system is separate and distinct from the electric battery system. According to some of the example embodiments, the auxiliary system is within a battery electric vehicle. For example, the auxiliary device may be configured to take measurements on vehicle components in proximity to the battery pack. For example, a coolant pump may be situated outside of the electric battery system, and supply coolant to other vehicle systems such as the air conditioning. It may be important for the battery system to make measurements on the coolant pump for optimised operation of the battery system. The auxiliary device may thereafter send such measurements to the centralized controller.

As another example, the battery system may need to know the state of, and be able to control, the vehicle on-board charger. The on-board charger is not typically part of the battery system, but its operation is closely linked to the operation of the battery system so it is desirable to connect the on-board charger sense and control to the battery system controller via the same near field communications bus. Thus, the auxiliary device may be configured to obtain measurements on the vehicle on-board charger and send such measurements to the centralized controller.

As additional example, the battery system may need to know the state of, and be able to control, the vehicle electrical inverter that converts the DC battery voltage to an AC voltage suitable to drive the traction motors. Again, the inverter is not typically part of the battery system, but its operation is closely linked to the operation of the battery system. Thus, an auxiliary device may also be configured to obtain measurements of the inverter as long as the inverter is situated on or within proximality to the near field communications bus.

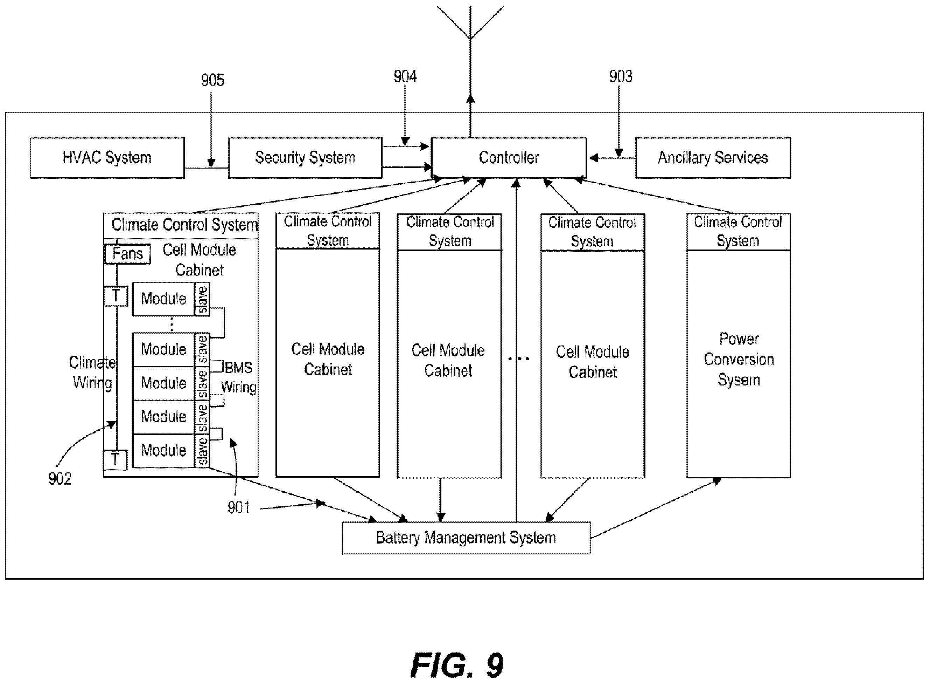

According to some embodiments, the auxiliary system may be a battery energy storage system. Figure 9 illustrates a known battery storage system featuring the battery monitoring system of Figure 2. As illustrated in Figure 9, the storage system comprises of multiple independent systems, such as, a HVAC system, a security system, ancillary services and the BMS. Many of these separate systems may use distinct communications protocols or channels 901, 902, 903, 904, 905. Thus, such a system would not facilitate the easy provision of a new sensor to be used for monitoring various distinct systems.

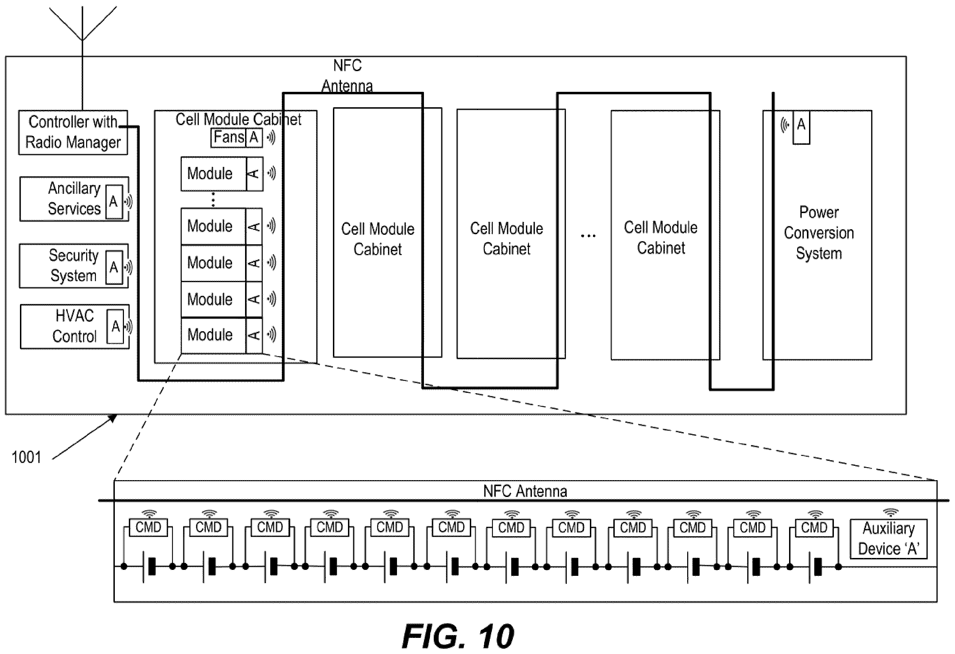

Figure 10 illustrates the storage system of Figure 9 featuring the battery monitoring system of Figure 3. In the example provided by Figure 3, the storage cabinets and independent monitoring systems are all configured to communication on the near field communications bus 1001. Furthermore, each system is configured with a respective near field antenna for communication on the near field communications bus. Such a configuration eliminates the strict hierarchical constraints associated with the system of Figure 9. The use of the auxiliary device allows for monitoring of various systems on a single communications bus.

The auxiliary device(s) A of Figure 10 may also aid data collection. By connecting all the sensors into a common bus, the data is collected into one place rather than scattered throughout multiple systems. Furthermore, the use of the near field communications bus allows the auxiliary device to be implemented in a plug and play fashion. Specifically, the auxiliary device may be added anywhere within the system of Figure 10 as long as the device has access to the near field communications bus. Thus, the auxiliary device does not need to be included at the manufacturing stage but may instead be included in a pre-existing system. It should be appreciated that as long the battery monitoring system and the auxiliary system have access to the near field communications bus, an auxiliary device may be placed anywhere along the communications bus to monitor any aspect of the battery monitoring system and/or auxiliary system.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

The various example embodiments described herein are described in the general context of method steps or processes, which may be implemented in one aspect by a computer program product, embodied in a computer-readable medium, comprising computer-executable instructions, such as program code, executed by computers in networked environments. A computer-readable medium may comprise removable and non-removable storage devices comprising, but not limited to, Read Only Memory (ROM), Random Access Memory (RAM), compact discs (CDs), digital versatile discs (DVD), etc. Generally, program modules may comprise routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

In the drawings and specification, there have been disclosed example embodiments. However, many variations and modifications can be made to these embodiments. Accordingly, although specific terms are employed, they are used in a generic and descriptive sense only and not for purposes of limitation, the scope of the embodiments being defined by the following claims.

Further features of the disclosure are set out in the following aspects.
1. A method, in an auxiliary device, for monitoring a module and/or pack of an electric battery system, wherein the electric battery system comprises at least one pack, each pack comprising at least one module and each module comprising a plurality of battery cells, wherein each battery cell is monitored via a cell monitoring device, CMD, which provides cell-level measurements, the method comprising:
   obtaining, with at least one sensor comprised in the auxiliary device, a module-level and/or pack-level measurement associated with the at least one module and/or the at least one pack, respectively, wherein the cell-level measurements are distinct from the module-level and pack-level measurements; and
   transmitting, via a near field antenna of the auxiliary device, to a centralized control unit, the module-level and/or pack-level measurement via a near field communications bus, wherein the centralized control unit is configured to control operations of the electric battery system, and wherein the near field communications bus is utilized by respective CMDs, in transmitting, via respective near field antennas of the CMDs, cell-level measurements to the centralized control unit.
2. The method of aspect 1, wherein the electric battery system is comprised within an enclosure, the method further comprising:
   obtaining, with the at least one sensor, an additional measurement associated with an environment external to the enclosure of the electric battery system, or at least one auxiliary system within an battery electric vehicle or a battery energy storage system, wherein the auxiliary system is separate and distinct from the electric battery system.
3. The method of any of aspects 1-2, wherein the electric battery system is a pre-existing system and the auxiliary device is configured to be placed in the electric battery system.
4. The method of any of aspects 1-3, further comprising:
   compiling a stored history of past measurements; and/or
   determining a control process based on the obtained module-level and/or pack-level measurement.
5. The method of aspect 4, wherein determining a control process further comprises:
   controlling a fault indicator or signaling line connected to the at least one module; and/or
   controlling an operation of a fan or other thermal management system of the electric battery system; and/or
   controlling a safety disconnect and interlock operation; and/or
   controlling a commutating switch.
6. The method of any of aspects 1-4, wherein the electric battery system is comprised within an enclosure, and wherein the auxiliary device is located at a boundary of the enclosure of the at least one module, the method further comprising:
   terminating the near field communications bus; and/or
   filtering Electromagnetic, EM, interference from entering or leaving the enclosure of the at least one module.
7. The method of any of aspects 1-6, further comprising:
   powering the auxiliary device from the near field communications bus by use of a bias-tee mechanism; or
   powering the auxiliary device directly from the at least one battery module; or
   powering the auxiliary device from an external source within the electric battery system.
8. The method of any of aspects 1-7, further comprising:
   receiving, from the centralized control unit, measurement and/or operation instructions; and/or
   autonomously performing measurement and/or operational tasks.
9. The method of any of aspects 1-8, wherein the transmitted measurement further comprises transmitting the module-level and/or pack-level measurement with an unique identifier associated with the auxiliary device.
10. An auxiliary device for monitoring a module and/or pack of an electric battery system,
   wherein the electric battery system comprises at least one pack, each pack comprising at least one module and each module comprising a plurality of battery cells, wherein each battery cell is monitored via a cell monitoring device, CMD, which provides cell-level measurements, the auxiliary device comprising:
   at least one sensor configured to obtain a module-level and/or pack-level measurement associated with the at least one module and/or the at least one pack, respectively, wherein the cell-level measurements are distinct from the module-level and pack-level measurements; and
   at least one radio frequency, RF, antennae configured to transmit, to a centralized control unit, the module-level and/or pack-level measurement via a near field communications bus, wherein the centralized control unit is configured to control operations of the electric battery system, and wherein the near field communications bus is utilized by respective CMDs, in transmitting, via respective near field antennas of the CMDs, cell-level measurements to the centralized control unit.
11. The auxiliary device of aspect 10, wherein the auxiliary device is further configured to perform the method steps of any of aspects 2, and 4-9.
12. The auxiliary device of aspects 10 or 11, wherein the electric battery system is a pre-existing system and the auxiliary device is configured to be placed in the electric battery system.
13. The auxiliary device of any of aspects 10-12, wherein the at least one sensor is a temperature, current and/or pressure sensor.
14. A machine-readable storage medium storing a set of instructions that are executable by one or more processors of an auxiliary device for monitoring a module and/or pack of an electric battery system, wherein the electric battery system comprises at least one pack, each pack comprising at least one module and each module comprising a plurality of battery cells, wherein each battery cell is monitored via a cell monitoring device, CMD, which provides cell-level measurements, wherein the set of instructions are configured to perform the method of any one of aspects 1, 2 and 4-9.

## Claims

1. A method, in an auxiliary device, for monitoring a module and/or pack of an electric battery system, wherein the electric battery system comprises at least one pack, each pack comprising at least one module and each module comprising a plurality of battery cells, wherein each battery cell is monitored via a cell monitoring device, CMD, which provides cell-level measurements, the method comprising:
obtaining, with at least one sensor comprised in the auxiliary device, a module-level and/or pack-level measurement associated with the at least one module and/or the at least one pack, respectively, wherein the cell-level measurements are distinct from the module-level and pack-level measurements; and
transmitting, via a radio frequency antenna of the auxiliary device, to a centralized control unit, the module-level and/or pack-level measurement via a common bus, wherein the centralized control unit is configured to control operations of the electric battery system, and wherein the common bus is utilized by respective CMDs, in transmitting, via respective radio frequency antennas of the CMDs, cell-level measurements to the centralized control unit.

2. The method of claim 1, wherein the radio frequency antenna is a near field antenna and/or the common bus is a near field communications bus.

3. The method of claim 1, wherein the electric battery system is comprised within an enclosure, the method further comprising: obtaining, with the at least one sensor, an additional measurement associated with an environment external to the enclosure of the electric battery system, or at least one auxiliary system within a battery electric vehicle or a battery energy storage system, wherein the auxiliary system is separate and distinct from the electric battery system.

4. The method of any of claims 1-3, wherein the electric battery system is a pre-existing system and the auxiliary device is configured to be placed in the electric battery system.

5. The method of any of claims 1-4, further comprising:
compiling a stored history of past measurements; and/or
determining a control process based on the obtained module-level and/or pack-level measurement.

6. The method of any of claims 1-5, further comprising:
controlling a fault indicator or signaling line connected to the at least one module; and/or
controlling an operation of a fan, a cooling fluid valve of the electric battery system; and/or
controlling a safety disconnect and interlock operation; and/or
controlling a commutating switch.

7. The method of any of claims 1-6, wherein the electric battery system is comprised within an enclosure, and wherein the auxiliary device is located at a boundary of the enclosure of the at least one module, the method further comprising:
terminating the common bus; and/or
filtering Electromagnetic, EM, interference from entering or leaving the enclosure of the at least one module.

8. The method of any of claims 1-7, further comprising:
powering the auxiliary device from the common bus by use of a bias-tee mechanism; or
powering the auxiliary device directly from the at least one battery module; or
powering the auxiliary device from an external source within the electric battery system.

9. The method of claim 8, further comprising placing the auxiliary device at the location of a balun in the battery management system to allow a bias-tee mechanism to power the auxiliary device.

10. The method of any of claims 1-9, further comprising:
receiving, from the centralized control unit, measurement and/or operation instructions; and/or
autonomously performing measurement and/or operational tasks.

11. The method of claim 10, further comprising distributing control functions of the at least one pack between the centralized control unit and the at least one module, wherein the control functions are associated with performing measurement and/or operational tasks.

12. The method of any of claims 1-11, wherein the transmitted measurement further comprises transmitting the module-level and/or pack-level measurement with an unique identifier associated with the auxiliary device.

13. The method of any of claims 1-12, further comprising switching between an active mode and a sleep mode, wherein:
transmitting, by the auxiliary device in active mode, the module-level and/or pack-level measurement regularly; and
periodically obtaining and locally storing, by the auxiliary device in a sleep mode, the module-level and/or pack-level measurement.

14. The method of any of claims 1-13, further comprising:
placing the auxiliary device in a cell string of the CMDs, wherein the auxiliary device controls a fuse; or
obtaining measurements on a vehicle on-board charger and sending the measurements to the centralized control unit; or
obtaining measurements of an inverter located in proximity to the common bus.

15. An auxiliary device for monitoring a module and/or pack of an electric battery system, wherein the electric battery system comprises at least one pack, each pack comprising at least one module and each module comprising a plurality of battery cells, wherein each battery cell is monitored via a cell monitoring device, CMD, which provides cell-level measurements, the auxiliary device comprising:
at least one sensor configured to obtain a module-level and/or pack-level measurement associated with the at least one module and/or the at least one pack, respectively, wherein the cell-level measurements are distinct from the module-level and pack-level measurements; and
at least one radio frequency, RF, antennae configured to transmit, to a centralized control unit, the module-level and/or pack-level measurement via a common bus, wherein the centralized control unit is configured to control operations of the electric battery system, and wherein the common bus is utilized by respective CMDs, in transmitting, via respective radio frequency antennas of the CMDs, cell-level measurements to the centralized control unit.

16. The auxiliary device of claim 15, wherein the auxiliary device is further configured to perform the method steps of any of claims 2-14.

17. The auxiliary device of claims 15 or 16, wherein:
the electric battery system is a pre-existing system and the auxiliary device is configured to be placed in the electric battery system; or
the at least one sensor is a temperature, current and/or pressure sensor.

18. The auxiliary device of any of claims 15-17, further comprising a controller providing a pre-processing of the module-level and/or pack-level measurement and determining a control process based on the module-level and/or pack-level measurement.

19. A machine-readable storage medium storing a set of instructions that are executable by one or more processors of an auxiliary device for monitoring a module and/or pack of an electric battery system, wherein the electric battery system comprises at least one pack, each pack comprising at least one module and each module comprising a plurality of battery cells, wherein each battery cell is monitored via a cell monitoring device, CMD, which provides cell-level measurements, wherein the set of instructions are configured to perform the method of any one of claims 1-14.
